# EUROPÄISCHE PATENTANMELDUNG

(11) **EP 1 426 709 A1**
(43) Veröffentlichungstag der Anmeldung: **09.06.2004**
(21) Anmeldenummer: 03016563.3
(22) Anmeldetag: 24.07.2003
(51) Int. Cl.: F24H 8/00, F24H 9/00, F24H 1/43

(54) **Heizgerät mit einem Verdrängungskörper und einem Bypasskanal im Heizgasweg**

(30) Priorität: 06.12.2002 DE 10257027
(71) Anmelder: ROBERT BOSCH GMBH, 70442 Stuttgart (DE)
(72) Erfinder: Hosch, Manfred, 73669 Lichtenwald (DE)

(57) **Zusammenfassung**

Es wird ein Heizgerät mit einem Brenner (10), einer Brennkammer (11), einer Wärmetauschereinheit (12) sowie einem Verdrängungskörper (30) vorgeschlagen. Der Verdrängungskörper (30) weist einen durchgehend verlaufenden Bypasskanal (35) auf, über den ein Teilstrom des Heizgasstromes an der Wärmetauschereinheit (12) vorbei in einen Abgassammelraum (20) geleitet wird.

## Beschreibung

Die Erfindung geht aus von einem Heizgerät nach dem Oberbegriff des Anspruchs 1.

### Stand der Technik

Zur Erhöhung des Wirkungsgrades bezüglich der Ausnutzung von Energie bei Heizgeräten ist aus der DE 195 10 612 A1 bekannt, in einer von einem Wärmetauscher umgebenen Brennkammer einen Verdrängungskörper anzuordnen, der die von einem Brenner erzeugten Heizgase an eine Heizfläche des Wärmetauschers leitet. Der Verdrängungskörper ist dabei topfförmig ausgebildet und weist an der äußeren Umfangswand Heizgasleitflächen auf, die sowohl eine Vergrößerung der Oberfläche des Verdrängungskörpers und damit eine wirkungsvollere Strahlungsheizfläche bilden als auch Einfluss auf die Strömungsgeschwindigkeit des Heizgases nehmen, wodurch der Wärmeübergang zur Heizfläche des Wärmetauschers hin verbessert wird.

Ein weiteres Heizgerät mit einem Verdrängungskörper im Heizgasweg ist aus der DE 29 17 759 C2 bekannt. Hierbei weist zusätzlich zu dem im Heizgasweg angeordneten Verdrängungskörper zur Erhöhung des Wärmeübergangs zum Wärmetauscher hin der Wärmetauscher Leitbleche auf, die von der Heizfläche des Wärmetauschers radial nach innen bis hin zum Verdrängungskörper verlaufen. Der Verdrängungskörper ist dabei aus einem Hochtemperatur-Isolationsmaterial ausgeführt und besitzt zur Anströmseite des Heizgases hin einen kegelförmigen Abschnitt.

Aufgabe der vorliegenden Erfindung ist es, ein Heizgerät mit einem Verdrängungskörper zu schaffen, bei dem mit einfachen Mitteln eine Anhebung der Temperatur des Abgases möglich ist.

### Vorteile der Erfindung

Das erfindungsgemäße Heizgerät mit den kennzeichnenden Merkmalen des Anspruchs 1 hat den Vorteil, dass eine Anhebung der Temperatur des Abgases erreicht wird, die insbesondere dann erforderlich ist, wenn Heizgeräte im kondensierenden Betrieb an einen nicht sanierten Schornstein angeschlossen werden müssen. Dabei wird ein Teilstrom des Heizgases am Wärmetauscher vorbei direkt dem Abgasstrom zugeführt.

Durch die in den Unteransprüchen aufgeführten Merkmale sind vorteilhafte Weiterbildungen des Heizgerätes möglich.

Besonders zweckmäßig ist es mittels des Bypasskanals eine direkt Einleitung des Teilstroms des Heizgases aus der Brennkammer in einen Abgassammelraum zu realisieren. Eine zusätzlich verbesserte Wärmeübertragung vom Heizgas auf das Heizwasser im Wärmetauscher bei gleichzeitiger Vergleichmäßigung der thermischen Beanspruchung des Wärmetauschers wird dadurch erzielt, wenn Abzweigkanäle vom Bypasskanal abzweigen, die eine Teil des durch den Bypasskanal strömenden Teilgasstroms gezielt an ausgewählte Bereiche der Heizfläche des Wärmetauschers leiten. Die Ausführung eines zentral im Verdrängungskörper angeordneten Bypasskanals ist dabei besonders zweckmäßig. Es ist aber auch denkbar, mehr als einen Bypasskanal durch den Verdrängungskörper zu legen.

### Zeichnung

Zwei Ausführungsbeispiele der Erfindung sind in der Zeichnung dargestellt und in der nachfolgenden Beschreibung erläutert.

Es zeigen:
Figur 1 eine schematische Schnittdarstellung durch ein Heizgerät mit einem Wärmetauscher für den kondensierenden Betrieb und
Figur 2 eine schematische Schnittdarstellung durch ein Heizgerät mit einem Wärmetauscher für den nichtkondensierenden Betrieb.

### Ausführungsbeispiele

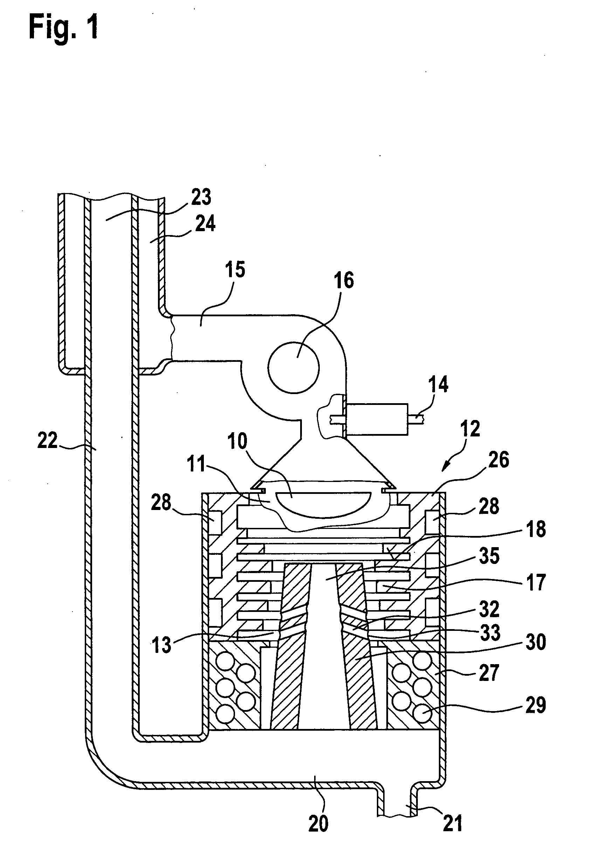

Das in Figur 1 dargestellte Heizgerät weist einen Brenner 10, eine Brennkammer 11 und eine Wärmetauschereinheit 12 mit einer Heizfläche 18 auf. Dem Brenner 10 wird ein Brenngas-/Luftgemisch zugeführt, wobei das Brenngas über eine Brenngasleitung 14 und die Verbrennungsluft über eine Luftzuführung 15 eingeleitet werden. Zur Zuführung der Verbrennungsluft dient ein Gebläse 16, das in die Luftzuführung 15 integriert ist. Der Brenner 10 sitzt am oberen Ende der Brennkammer 11, wobei die Brennkammer 11 seitlich von einem Teil der Wärmetauschereinheit 12 umgeben ist.

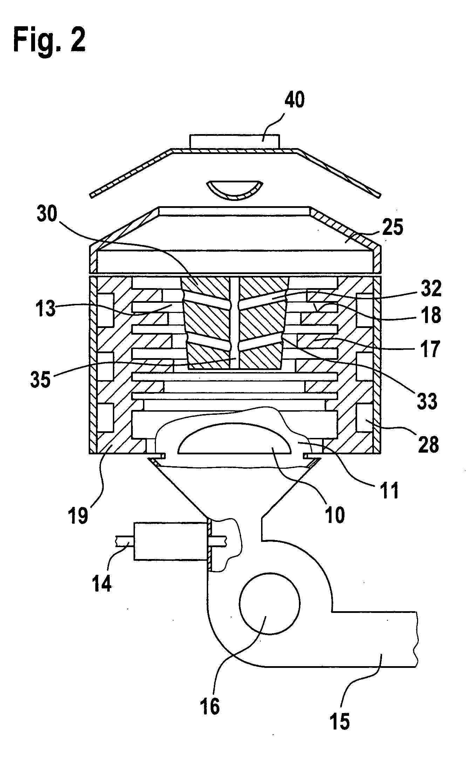

Stromab der Wärmetauschereinheit 12 ist ein Abgassammelraum 20 angeordnet, an dessen tiefster Stelle eine Kondensatabführung 21 liegt. An den Abgasraum 20 schließt sich eine Abgasabführung 22 an, die in ein Abgasrohr 23 mündet. Bei dem dargestellten Ausführungsbeispiel gehört das Abgasrohr 23 zu einem Anschluss, bei dem das Abgasrohr 23 koaxial von einem Luftzuführrohr 24 umgeben ist. Das Luftzuführrohr 24 zweigt zur Luftzuführung 15 ab. Es ist aber genauso möglich, die Abgasabführung 22 des Heizgerätes gemäß Figur 1 an einen Kaminanschluss gemäß Figur 2 anzuschließen.

Die Wärmetauschereinheit 12 ist zylinderförmig ausgeführt und besitzt beispielsweise einen dem Brenner 10 zugewandten Heißgaswärmetauscherabschnitt 26 und einen den Brenner 10 abgewandten Kondensationswärmetauscherabschnitt 27. Dadurch ist ein modularer Aufbau der Wärmetauschereinheit 12 möglich, wobei der Heißgaswärmetauscherabschnitt 26 auch einzeln bei einem sogenannten konventionellen Heizgerät ohne Ausnutzung der Kondensationswärme des Heizgases gemäß Figur 2 eingesetzt werden kann. Der Heißgaswärmetauscherabschnitt 26 besitzt am Außenumfang spiralförmig verlaufende Wasserkanäle 28 für das zu erwärmende Heizwasser. Beim Kondensationswärmetauscherabschnitt 27 sind weitere Heizwasserkanäle 29 vorhanden, die hierbei jedoch in den Körper des Kondensationswärmetauscherabschnitts 27 integriert sind. Es ist aber genauso denkbar, die weiteren Heizwasserkanäle 29 als spiralförmiges Rohrbündel auszuführen oder spiralförmig am Kondensationswärmetauscherabschnitt 27 anzuordnen.

Innerhalb der Wärmetauschereinheit 12 ist anschließend an die Brennkammer 11 beispielsweise eine im Wesentlichen zylinderförmig verlaufende Heizkammer 13 ausgebildet, in der sich ein Verdrängungskörper 30 befindet. Das vom Brenner 10 erzeugte Heizgas wird dabei entgegen der Auftriebsrichtung durch die Heizkammer 13 geleitet. Die Heizkammer 13 wird radial von der Heizfläche 18 der Wärmetauschereinheit 12 begrenzt. Der Verdrängungskörper 30 erstreckt sich beispielsweise in Strömungsrichtung des Heizgasstromes vom strömungsseitigen Eingang des Heißgaswärmetauscherabschnitts 26 bis zum strömungsseitigen Ausgang des Kondensationswärmetauscherabschnitts 27.

Die zur Heizkammer 13 weisende Heizfläche 18 des Heißgaswärmetauscherabschnitts 26 ist zur Vergrößerung der Oberfläche mit Rippen 17 ausgeführt. Die Heizfläche 18 des Kondensationswärmetauscherabschnitt 27 besitzt gemäß dem vorliegenden Ausführungsbeispiel eine glatte Oberfläche. Es ist aber genauso möglich, auch diesen Abschnitt der Wärmetauschereinheit 12 mit Rippen oder einer anderen, den Wärmeübergang verbessernden Oberflächenstruktur auszuführen.

Der Verdrängungskörper 30 ist beispielsweise konisch ausgeführt, wobei der Kegel in Strömungsrichtung des Heizgasstromes zunimmt. Der Verdrängungskörper 30 besitzt einen axial durch den Verdrängungskörper 30 hindurch führenden Bypasskanal 35. Im vorliegenden Ausführungsbeispiel zweigen von dem Bypasskanal 35 radial geneigt Ausströmkanäle 32 ab. Es ist aber auch eine Ausführungsform möglich, die ohne die Abzweigkanäle 23 auskommt. Bei dieser Ausführungsform ist im Verdrängungskörper 30 lediglich ein Bypasskanal 35 oder mehrerer Bypasskanäle vorhanden, über den bzw. über die ein Teilgasstrom das Heizgasstromes ohne Berührung mit der Heizfläche 18 direkt in den Abgassammelraum 20 geführt wird.

Die Ausströmkanäle 32 münden mit Ausströmöffnungen 33 radial verteilt in der Mantelfläche des Verdrängungskörpers 30, so dass Teilströme des Heizgases auf ausgewählte Bereiche der Heizfläche 18 der Wärmetauschereinheit 12 bzw. des Heißgaswärmetauscherabschnitts 26 gelenkt werden. Dadurch werden weniger beanspruchte Bereiche der Heizfläche 18 der Wärmetauschereinheit 12 bzw. des Heißgaswärmetauscherabschnitts 26 stärker mit Heizgas beaufschlagt und umgekehrt hoch beanspruchte Bereiche der Heizfläche 18 des Wärmetauscherabschnitts 12 entlastet. Im vorliegenden Ausführungsbeispiel beschränken sich die Ausströmöffnungen 33 der Ausströmkanäle 32 auf den Heißgaswärmetauscherabschnitt 26.

Im Bereich des Kondensationswärmetauscherabschnitts 27 wird das an der Oberfläche vorbeiströmende Heizgas durch den konisch ansteigenden Verlauf des Verdrängungskörpers 30 in Richtung der Heizfläche 18 des Kondensationswärmetauscherabschnitts 27 geführt. Es ist aber auch eine Ausführungsform denkbar, bei der sowohl im Heißgaswärmetauscherabschnitt 26 als auch im Kondensationswärmetauscherabschnitt 27 Ausströmkanäle 32 vorliegen, die das Heizgas gezielt ausgewählten Bereichen der Heizfläche 18 dieser Abschnitte zuleiten.

Die Ausführungsform gemäß Figur 1 ist beispielsweise geeignet, um an sich kondensierende Heizgeräte mit einer Abgaserwärmung auszurüsten, wodurch das Heizgas über dem Taupunkt gehalten wird. Dadurch ist das an sich für Brennwerttechnik ausgelegte Heizgerät auch an solche Abgasabführungen bzw. Schornsteine anschließbar, die nicht für den kondensierenden Betrieb von Heizgeräten geeignet sind.

Auf Grund des modularen Aufbaus der Wärmetauschereinheit 12 ist der Heißgaswärmetauscherabschnitt 26 gemäß Figur 1 auch als Wärmetauschereinheit 19 für ein Heizgerät gemäß Figur 2 einsetzbar. Hierbei ist die sich in Strömungsrichtung des Heizgases erstreckende Ausdehnung des Heißgaswärmetauscherabschnitts 26 als Wärmetauschereinheit 19 ausreichend. Heizgeräte gemäß Figur 2 sind beispielsweise solche, die nicht die Kondensationswärme des im Heizgas enthaltenen Wasserdampfes ausnutzen. Das Heizgerät gemäß Figur 2 ist dabei an einen Kaminanschluss 40 angeschlossen, wobei die Verbrennungsluft aus dem Aufstellungsraum des Heizgerätes über die Luftzuführung 15 und über das Gebläse 16 dem Brenner 10 zugeführt wird. Bei dem in Figur 2 dargestellten Heizgerät strömt das Heizgas in der Heizkammer 13 in Auftriebsrichtung. Auch bei dem Heizgerät gemäß Figur 2 weist der in der Heizkammer 13 sich befindende Verdrängungskörper 30 einen zentralen Bypasskanal 35. Über den Bypasskanal 35 wird ein Teilgasstrom des Heizgases von der Brennerkammer 11 direkt in eine Abgassammelraum 25 geleitet. Vom Bypasskanal 35 zweigen ferner radial geneigte verlaufende Ausströmkanälen 32 ab, so dass ein Teil des Heizgases gezielt ausgewählten Bereichen der Heizfläche 18 des Wärmetauschereinheit 19 zugeleitet werden kann.

Der beschriebene Bypasskanal ist somit sinnvoll einsetzbar in Brennwertgeräten (kondensierender Betrieb) oder in konventionellen Heizgeräten (nicht kondensierender Betriebe) für den Anschluss an nicht kondensatfeste Kamine oder in konventionellen Heizgeräten mit Außenwandanschluss, bei denen ebenfalls verhindert werden muss, dass es im Abgasweg zur Kondensatbildung kommt.

Die Erfindung ist nicht an einen modularen Aufbau der Wärmetauschereinheit 12 gemäß Figur 1 gebunden. Die Erfindung ist somit einsetzbar bei jedem Wärmetauscher, bei dem verhindert werden soll, dass es im Abgasweg zur Kondensatbildung kommt.

Darüber hinaus besteht eine weiterbildende Ausführungsform darin, dass sich im oder am Bypasskanal 35 im Verdrängungskörper 30 ein Ventil befindet, das in Abhängigkeit von der Temperatur des Abgases öffnet. Die Ansteuerung des Ventils kann dabei über einen Abgastemperaturfühler und durch Betätigung mittels eines Schrittmotors oder rein mechanisch durch einen Ausdehnungsfühler im Abgas über ein Kapillare auf das Ventil wirkend erfolgen.

## Patentansprüche

1. Heizgerät mit einem Brenner, einer Brennkammer, einer Wärmetauschereinheit sowie mit einem im Heizgasstrom angeordneten Verdrängungskörper, der die Strömung des Heizgases zu einer Heizfläche der Wärmetauschereinheit lenkt, **dadurch gekennzeichnet, dass** der Verdrängungskörper (30) mindestens einen Bypasskanal (35) für das Heizgas aufweist.

2. Heizgerät nach Anspruch 1, **dadurch gekennzeichnet, dass** der Bypasskanal (35) durch den Verdrängungskörper (30) hindurch verläuft.

3. Heizgerät nach Anspruch 1, **dadurch gekennzeichnet, dass** der Bypasskanal (35) eine Strömungsverbindung für einen Teilstrom des Heizgases zwischen der Brennkammer (11) und einem Abgassammelraum (20) herstellt.

4. Heizgerät nach Anspruch 1, **dadurch gekennzeichnet, dass** vom Bypasskanal (35) Abzweigkanäle (32) abzweigen.

5. Heizgerät nach Anspruch 4, **dadurch gekennzeichnet, dass** über die Abzweigkanäle (32) Teilgasströme des Heizgases gezielt ausgewählten Bereichen der Heizfläche (18) der Wärmetauschereinheit (12) zuführbar sind.

6. Heizgerät nach Anspruch 4 oder 5, **dadurch gekennzeichnet, dass** die Abzweigkanäle (32) zu am Verdrängungskörper (30) radial angeordneten Ausströmöffnungen (33) führen.

7. Heizgerät nach einem der vorhergehenden Ansprüche, **dadurch gekennzeichnet, dass** der Verdrängungskörper (30) konisch ausgeführt ist, wobei der Durchmesser des Kegels in Strömungsrichtung des Heizgasstroms zunimmt.

8. Heizgerät nach einem der vorhergehenden Ansprüche, **dadurch gekennzeichnet, dass** die Wärmetauschereinheit (12) modular aufgebaut ist und einen Heißgaswärmetauscherabschnitt (26) und einen Kondensationswärmetauscherabschnitt (27) aufweist.

9. Heizgerät nach einem der vorhergehenden Ansprüche, **dadurch gekennzeichnet, dass** in den Bypasskanal (35) ein Ventil integriert ist, das in Abhängigkeit von der Temperatur des Abgases öffnet.
